# EUROPEAN PATENT APPLICATION

(11) **EP 1 235 404 A1**
(43) Date of publication of application: **28.08.2002**
(21) Application number: 01965670.1
(22) Date of filing: 17.09.2001
(51) Int. Cl.: H04L 27/34, H03M 13/29

(54) **WIRELESS TRANSMISSION DEVICE AND TRANSMISSION SIGNAL MAPPING METHOD**

(30) Priority: 21.09.2000 JP 2000286826
(71) Applicant: MATSUSHITA ELECTRIC INDUSTRIAL CO., LTD., Kadoma-shi, Osaka 571-8501 (JP)
(72) Inventor: UESUGI, Mitsuru, Yokosuka-shi, Kanagawa 238-0048 (JP); SUZUKI, Hidetoshi, Yokosuka-shi, Kanagawa 239-0847 (JP); MIYOSHI, Kenichi, Yokohama-shi, Kanagawa 236-0058 (JP)
(74) Representative: Grünecker, Kinkeldey, Stockmair & Schwanhäusser Anwaltssozietät
(86) International application number: JP0108033
(87) International publication number: WO02025887

(57) **Abstract**

S/P transform section 101a transforms transmission data A from serial data into parallel data, and outputs the parallel data to 16QAM mapping section 102 as data to be mapped onto bits (S0 and S1) with relatively high quality. S/P transform section 101b transforms transmission data B from serial data into parallel data, and outputs the parallel data to 16QAM mapping section 102 as data to be mapped onto bits (S2 and S3) with relatively low quality. 16QAM mapping section 102 performs mapping on transmission data A and B on the signal space diagram of 16QAM by Gray Coding. Then, transmission data A and B undergoes digital modulation, and is transmitted to a communicating party via antenna 105.

## Description

### Technical Field

The present invention relates to a radio transmission apparatus and transmission signal mapping method in a digital radio communication system.

### Background Art

Recently, fast transmission has been performed in a digital radio communication system. In particular, in a next-generation mobile communication system, a downlink information amount is expected to greatly exceed an uplink information amount, and therefore, fast downlink transmission is seriously required.

Frequency bands used in a radio communication system are limited, and when fast transmission is performed in limited frequency bands, it is necessary to use an M-ary modulation scheme as a modulation scheme.
In the M-ary modulation scheme, using the same frequency, for example, in BPSK (Binary PSK) one bit is transmitted by one symbol, in QPSK (Quadrature PSK) two bits are transmitted by one symbol, in 8SPK (8-ary PSK) three bits are transmitted by one symbol, in 16QAM (16 Quadrature Amplitude Modulation) four bits are transmitted by one symbol, and in 64QAM (64 Quadrature Amplitude Modulation) six bits are transmitted by one symbol. Thus, as the number of modulation levels in an M-ary modulation is increased, an information amount that one symbol is capable of transmitting is increased, resulting in fast transmission.

However, when M-ary modulation schemes are used in a conventional digital radio communication system, mapping is performed on bits without considering the quality for each bit, and a signal sequence is transmitted with the same quality.

For example, in a turbo coder, it is required to transmit a non-coded signal sequence (systematic bit) and coded signal sequence (parity bit). Despite the quality of systematic bit affecting the quality of performance of a decoded result greater than the quality of parity bit, the entire signal sequence is transmitted with the same quality. Therefore, there is a fear that the deterioration of systematic bit causes the performance of a decoded result to deteriorate.

Further, in order to decrease the delay of data, it is required to decrease the number of repeat times when the repeat is performed, for which it is necessary that data can be transmitted assuredly by first repeat so as not to cause another repeat. However, even when the repeat is performed, a repeat signal is subjected to mapping without considering the quality for each bit, and the repeat data is transmitted with the same quality as that of other data, resulting in an increased possibility of performing repeat twice or more.

Furthermore, with respect to a single item of data, even when erroneous upper bits affect the system more than erroneous lower bits, like a report value of channel quality, mapping is performed on bits without considering the quality for each bit, and a signal sequence is transmitted with the same quality. Therefore, it is not possible to increase the quality of a bit having the greatest effect when the bit is erroneous, and the system performance tends to deteriorate.

### Disclosure of Invention

It is an object of the present invention to provide a radio transmission apparatus and transmission signal mapping method enabling improved reception performance including decoding and repeat at a receiving side and improved transmission efficiency.

In M-ary modulation such as 16QAM, the transmission quality originally differs for each bit, and for example, an error rate with respect to the same S/N (Signal to Noise) ratio differs depending on bit position. The inventor found out that using the above fact, assigning a specific signal sequence (data) preferentially corresponding to the transmission quality for each bit increases the transmission quality and improves the reception performance at a receiving side. Examples of the specific signal sequence include upper bits of a plurality of bits, repeat information, information with high importance, and information having a great effect on the system.

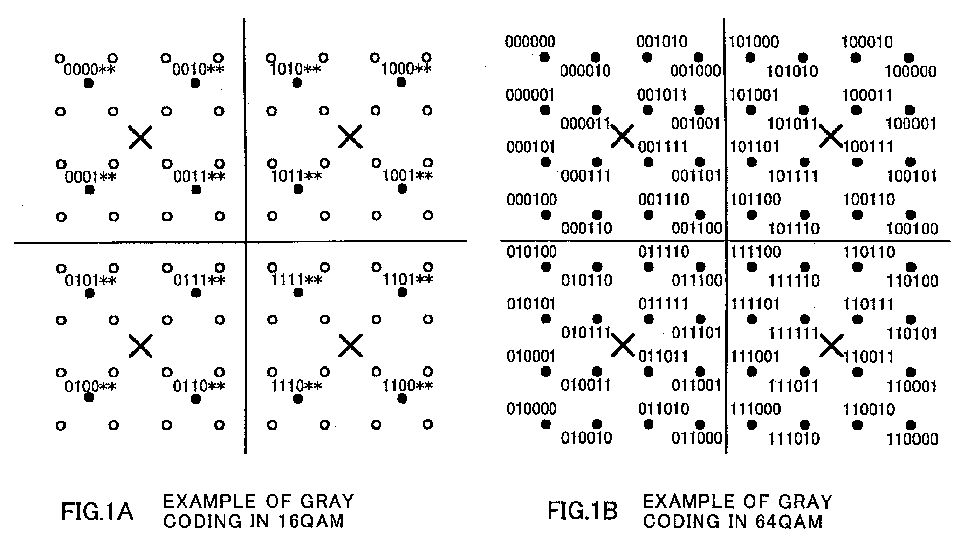

FIG.1A is a view showing a signal space diagram in Gray Coding of 16QAM, and FIG. 1B is a view showing a signal space diagram in Gray Coding of 64QAM. Gray coding is such bit mapping that results in only one erroneous bit even when a symbol is decided as a neighboring symbol due to, for example, a multiplexed noise.

In 16QAM shown in FIG.1A, one symbol represents four bits, and in bit representation, bits are assumed to be referred to as S0 to S3 in descending order of significance. In other words, a most significant bit is S0, and a least significant bit is S3. In 64QAM shown in FIG.1B, one symbol represents six bits, and in bit representation, bits are assumed to be referred to as S0 to S5 in descending order of significance. In other words, a most significant bit is S0, and a least significant bit is S5.

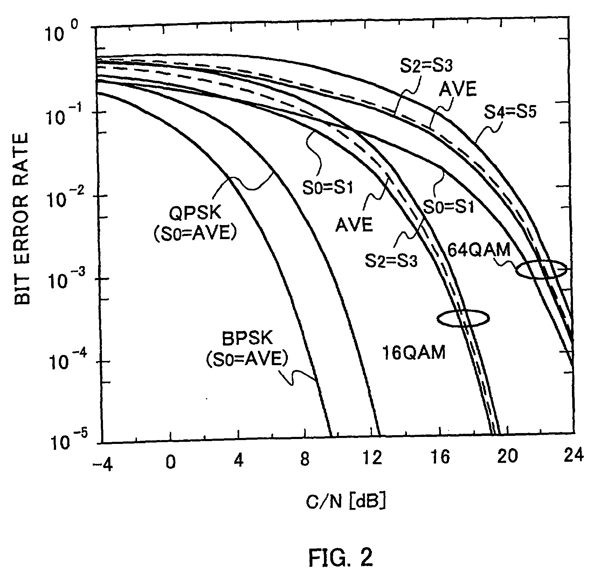

When such bit mapping is performed, error bit rates in static characteristics are as shown in FIG.2. It is understood from FIG.2 that the error rate does not differ between bits in QPSK, while the error rate differs between bits in 16QAM and 64QAM. For example, in 16QAM S0 and S1 have higher quality than S2 and S3. In 64QAM S0 and S1 have higher quality than S2 and S3 which have higher quality than S4 and S5. In addition, in FIG.2, AVE indicates an average of error rates of all the bits.

Accordingly, it is a gist of the present invention to using the characteristics shown in FIG.2, assign preferentially data required not to be erroneous and data to be protected to bits with good transmission quality in M-ary modulation, and to increase the transmission quality to improve reception quality at a receiving side.

### Brief Description of Drawings

FIG.1A is a diagram showing an example of Gray coding of 16QAM;
FIG. 1B is a diagram showing an example of Gray coding of 64QAM;
FIG.2 is a graph showing the relationship between bit error rate and C/N;
FIG.3 is a block diagram illustrating a configuration of a radio transmission apparatus according to a first embodiment of the present invention;
FIG.4 is a block diagram illustrating a configuration of a radio reception apparatus that performs radio communications with the radio transmission apparatus according to the first embodiment of the present invention;
FIG.5 is a block diagram illustrating a configuration of a radio transmission apparatus according to a second embodiment of the present invention;
FIG.6 is a block diagram illustrating a configuration of a radio transmission apparatus according to a third embodiment of the present invention;
FIG.7 is a block diagram illustrating a configuration of a radio transmission apparatus according to a fourth embodiment of the present invention;
FIG.8 is a block diagram illustrating a configuration of a turbo coder in the radio transmission apparatus illustrated in FIG.7;
FIG.9 is a block diagram illustrating a configuration of a radio reception apparatus that performs radio communications with the radio transmission apparatus according to the fourth embodiment of the present invention;
FIG.10 is a block diagram illustrating a configuration of a turbo decoder in the radio reception apparatus illustrated in FIG.9;
FIG.11 is a table showing bit assignment in a transmission signal mapping method according to the fourth embodiment of the present invention;
FIG.12 is a block diagram showing a configuration of a conventional radio transmission apparatus; and
FIG.13 is a table showing bit assignment in a conventional transmission signal mapping method.

### Best Mode for Carrying Out the Invention

Embodiments of the present invention will be described below with reference to accompanying drawings.

### (First embodiment)

This embodiment explains a case where signal sequence A (data A) and signal sequence B (data B) with different QoS (Quality of Service) are assigned to different bits of the same symbol, subjected to M-ary modulation and then transmitted, thereby increasing the transmission quality to improve the reception performance at a receiving side. When signal sequences with different QoS are transmitted, it is possible to cope using effective error detection. However, by considering that the error rate differs for each bit originally in M-ary modulation, in other words, by assigning data with higher QoS to a bit with higher transmission quality, it is possible to improve the reception performance at a receiving side and to improve the transmission efficiency.

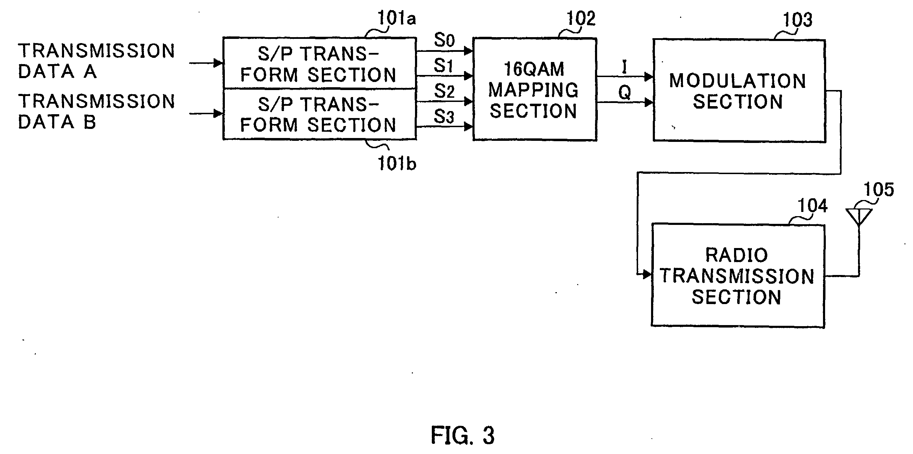

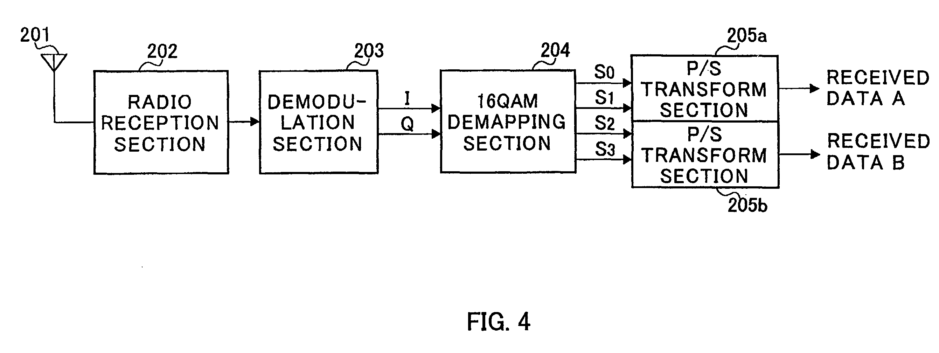

FIG.3 is a block diagram illustrating a configuration of a radio transmission apparatus according to the first embodiment of the present invention. FIG.4 is a block diagram illustrating a configuration of a radio reception apparatus that performs radio communications with the radio transmission apparatus according to the first embodiment of the present invention. In addition, while FIG.3 shows only sections for transmission in the radio transmission apparatus to simplify the description and FIG.4 shows only sections for reception in the radio reception apparatus to simplify the description, the radio transmission apparatus in FIG.3 is provided with sections for reception and the radio reception apparatus in FIG.4 is provided with sections for transmission.

This embodiments explains a case of transmitting two items of data, i.e., transmission data A and B to simplify the description. However, the present invention is applicable to a case of transmitting three or more items of transmission data. It is assumed that transmission data A has higher QoS than transmission data B.

The radio transmission apparatus illustrated in FIG.3 is provided with serial/parallel transform (hereinafter refereed to as "S/P transform") sections 101a and 101b that perform S/P transform, 16QAM mapping section 102 that maps S/P transformed data onto signal points of 16QAM, modulation section 103 that performs digital modulation on 16QAM mapped data, radio transmission section 104 that performs radio transmission processing on the digital-modulated signal, and antenna 105 that transmits a radio-transmission-processing processed signal.

The radio reception apparatus illustrated in FIG.4 is provided with antenna 201 that receives a radio signal, radio reception section 202 that performs radio reception processing on the received signal, demodulation section 203 that demodulates the radio-reception-processing processed signal, 16QAM demapping section 204 that performs demapping (decision) on the demodulated signal on a signal space diagram of 16QAM, and P/S (hereinafter refereed to as "P/S") transform sections 205a and 205b that perform P/S transform on data on signal points of 16QAM.

A case will be described below of performing the transmission signal mapping method of the present invention using the radio transmission apparatus and radio reception apparatus with the above configurations.

In the radio transmission apparatus illustrated in FIG.3, transmission data A and B is respectively output to S/P transform sections 101a and 101b. S/P transform section 101a transforms transmission data A from serial data into parallel data, and outputs the parallel data to 16QAM mapping section 102 as data to be mapped onto bits (S0 and S1) with relatively high quality. S/P transform section 101b transforms transmission data B from serial data into parallel data, and outputs the parallel data to 16QAM mapping section 102 as data to be mapped onto bits (S2 and S3) with relatively low quality.

16QAM mapping section 102 performs mapping on transmission data A and B on the signal space diagram of 16QAM by Gray Coding, and outputs transmission data A and B as in-phase component (I-component) signals and quadrature component (Q-component) signals to modulation section 103.

Modulation section 103 performs the digital modulation on the I-component signals and Q-component signals of transmission data A and B. Transmission data A and B subjected to the digital modulation is output to radio transmission section 104, is subjected to predetermined radio transmission processing (D/A conversion and upconverting) in radio transmission section 104, and is transmitted to a communicating party via antenna 105.

In the radio reception apparatus illustrated in FIG.4, radio reception section 202 receives the signal transmitted from a communicating party via antenna 201. Radio reception section 202 performs predetermined reception processing (downconverting and A/D conversion) on the received signal, and outputs received data subjected to the radio reception processing to demodulation section 203. Demodulation section 203 performs the digital demodulation on the received data to output as an I-component signal and Q-component signal to 16QAM demapping section 204.

16QAM demapping section 204 performs demapping (decision) on the received data on the signal space diagram of 16QAM by Gray coding to output for each bit to P/S transform sections 205a and 205b. Herein, the section 204 outputs bits S0 and S1 assigned data A with high QoS to P/S transform section 205a, while outputting bits S2 and S3 assigned data B with low QoS to P/S transform section 205b.

P/S transform section 205a transforms data A from parallel data into serial data to output received data A. P/S transform section 205b transforms data B from parallel data into serial data to output received data B.

Thus, with respect to data A and data B transmitted from the radio transmission apparatus illustrated in FIG.3 to the radio reception apparatus illustrated in FIG.4, data A is transmitted using bits S0 and S1, while data B is transmitted using bits S2 and S3. As shown in FIG.2, since S0 and S1 have a bit rate lower than that of S2 and S3 in 16QAM, data A is transmitted with relatively high transmission quality. In other words, data A with high QoS is transmitted with a lower possibility of being erroneous. Accordingly, data A with high QoS is received with high quality in the radio reception apparatus, and thereby the reception performance in the radio reception apparatus is improved.

In addition, in this embodiment, determining data as data with high QoS is made according to, for example, a method predetermined in the system.

### (Second embodiment)

This embodiment explains a case where transmission data and repeat data is assigned to different bits of the same symbol, subjected to M-ary modulation, and then transmitted, thereby increasing the transmission quality to improve the reception quality at a receiving side.

In the repeat, when first repeat data is received with reliability, data transmission delay is small. However, when the first repeat data is erroneous, second repeat data is transmitted, which increases data delay. Accordingly, by assigning the repeat data to a bit with higher transmission quality than general new data, it is possible to increase the transmission efficiency.

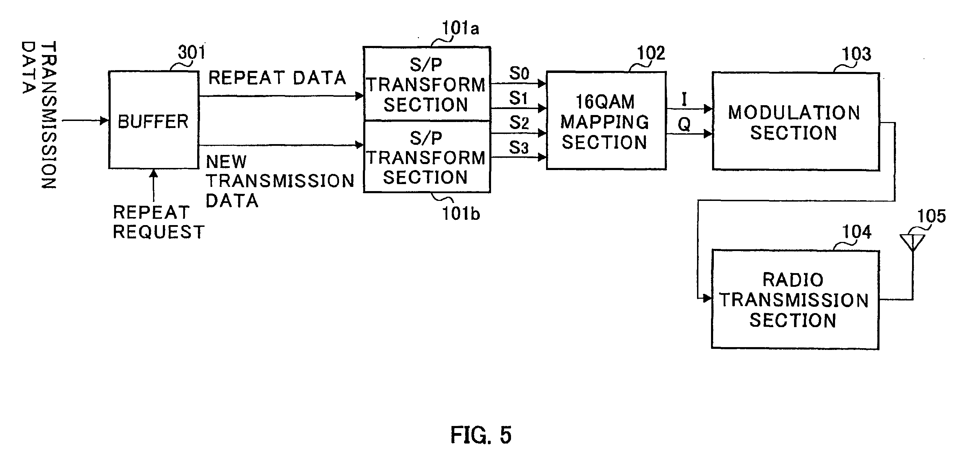

FIG.5 is a block diagram illustrating a configuration of a radio transmission apparatus according to the second embodiment of the present invention. In addition, in FIG.5 the same sections as in FIG.3 are assigned the same reference numerals as in FIG.3 to omit specific descriptions thereof. Further, while FIG.5 shows only sections for transmission in the radio transmission apparatus to simplify the description, the radio transmission apparatus in FIG.5 is provided with sections for reception.

While this embodiment explains a case of transmitting a single item of transmission data to simplify the description, the present invention is applicable to a case of transmitting two or more items of transmission data.

The radio transmission apparatus illustrated in FIG. 5 is provided with buffer 302 that stores transmission data. Buffer 301 outputs repeat data or transmission data corresponding to repeat request transmitted from a communicating party to S/P transform sections 101a and 101b.

A case will be described below of performing the transmission signal mapping method of the present invention using the radio transmission apparatus and radio reception apparatus with the above configurations.

In the radio transmission apparatus illustrated in FIG.5, transmission data is stored in buffer 301. When receiving a repeat request, buffer 301 outputs repeat data to S/P transform section 101a, while outputting new transmission data to S/P transform section 101b.

In addition, examples of an error correcting algorithm using repeat include Stop and Wait ARQ, Bo Back N ARQ, Selective Repeat ARQ and hybrid ARQ. Accordingly, repeat data may be the same data as erroneous data, or may be only redundant information for increasing error detection capability such as TYPE-II and TYPE-III in Hybrid ARQ.

S/P transform section 101a transforms repeat data from serial data into parallel data, and outputs the parallel data to 16QAM mapping section 102 as data to be mapped onto bits (S0 and S1) with relatively high quality. S/P transform section 101b transforms new transmission data from serial data into parallel data, and outputs the parallel data to 16QAM mapping section 102 as data to be mapped onto bits (S2 and S3) with relatively low quality.

16QAM mapping section 102 performs mapping on the repeat data and new transmission data on the signal space diagram of 16QAM by Gray Coding, and outputs respective in-phase component (I-component) signals and quadrature component (Q-component) signals of the repeat data and new transmission data to modulation section 103.

Modulation section 103 performs the digital modulation on the I-component signals and Q-component signals of the repeat data and new transmission data. The repeat data and new transmission data subjected to the digital modulation is output to radio transmission section 104, is subjected to the predetermined radio transmission processing in radio transmission section 104, and is transmitted to a communicating party via antenna 105.

In the reception apparatus, the signal transmitted from a communicating party is subjected to the predetermined radio reception processing and then to digital demodulation. Then, with respect to the I-component signal and Q-component signal, a decoded signal is subjected to demapping (decision) on the signal space diagram of 16QAM by Gray Coding. Then, the repeat data is obtained from bits S0 and S1 assigned the repeat data, while the new transmission data is obtained from bits S2 and S3 assigned the new transmission data.

Thus, with respect to repeat data and new transmission data transmitted from the radio transmission section illustrated in FIG.5 to the radio reception apparatus, the repeat data is transmitted using bits S0 and S1, while the new transmission data is transmitted using bits S2 and S3. As shown in FIG.2, since S0 and S1 have a bit rate lower than that of S2 and S3 in 16QAM, the repeat data is transmitted with relatively high transmission quality. In other words, the repeat data requiring a relatively low possibility of being erroneous is transmitted with a lower possibility of being erroneous. Accordingly, the repeat data is received with high quality in the radio reception apparatus, whereby a possibility of receiving first repeat data correctly is increased and the transmission delay can be decreased.

In this embodiment, when there is no repeat request, new transmission data may be output to S/P transform section 101a, and assigned to all bits S0 to S3 to be transmitted.

In addition, in this embodiment, with respect to a patter of repeat data and new transmission data to be transmitted when a repeat request is received, for example, transmission patterns of repeat data and new transmission data may be predetermined to transmit the repeat data and new transmission data corresponding to transmission pattern notified from a communicating party.

### (Third embodiment)

This embodiment explains a case that transmission data such as channel quality information is composed of a plurality of bits, upper bits and lower bits are assigned to different bits of the same symbol, subjected to M-ary modulation, and then transmitted, thereby increasing the transmission quality to improve the reception performance at a receiving side.

In the channel quality information or the like, erroneous upper bits affect the system greatly. For example, it is assumed that the channel quality is represented by 64 stages with six bits. With respect to a report value of 63 representing the most excellent quality, an erroneous most significant bit makes a value of 31. On the other hand, an erroneous least significant bit makes a value of 62. Accordingly, by assigning upper bits to bits with high transmission quality than lower bits, it is possible to improve the reception performance at a receiving side.

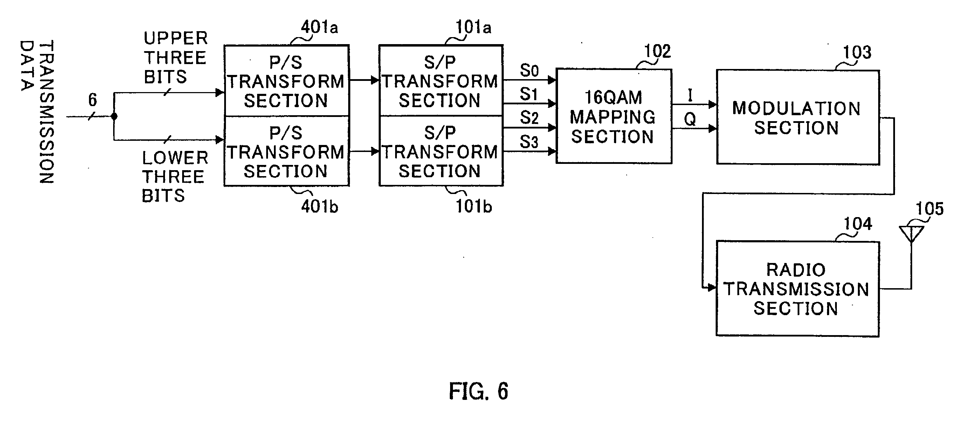

FIG.6 is a block diagram illustrating a configuration of a radio transmission apparatus according to the third embodiment of the present invention. In addition, in FIG.6 the same sections as in FIG.3 are assigned the same reference numerals as in FIG.3 to omit specific descriptions thereof. Further, while FIG.6 shows only sections for transmission in the radio transmission apparatus to simplify the description, the radio transmission apparatus in FIG.6 is provided with sections for reception.

While this embodiment explains a case of transmitting a single item of transmission data, the present invention is applicable to a case of transmitting two or more items of transmission data.

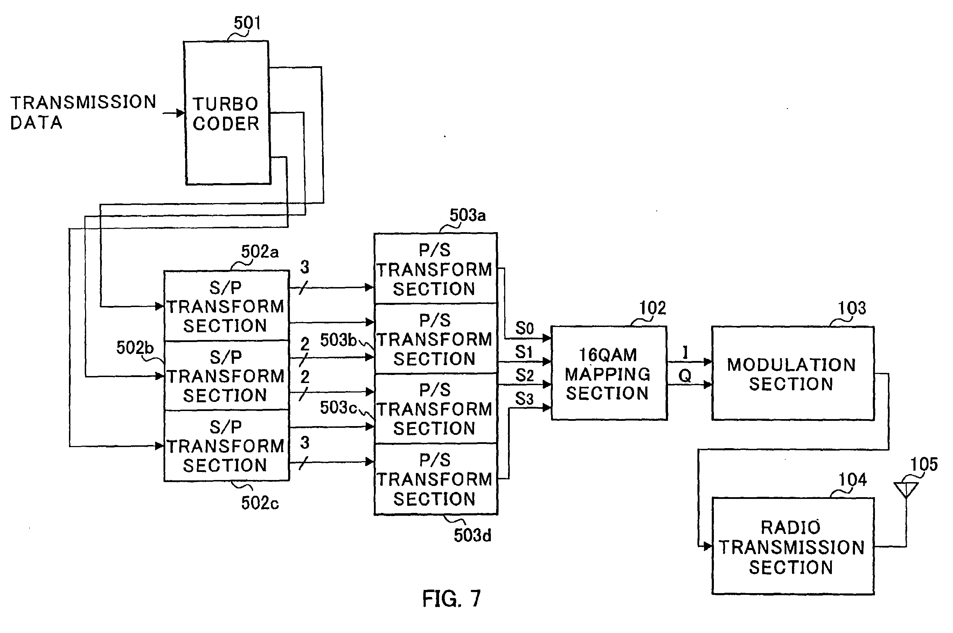

The radio transmission apparatus illustrated in FIG.7 is provided with P/S transform sections 401a to perform P/S transform upper bit on transmission data and P/S transform sections 401b to perform P/S transform lower bit on transmission data. P/S transform section 401a performs P/S transform on data of the upper bits on transmission data to output to S/P transform section 101a. P/S transform section 401b performs P/S transform on data of the lower bits to output to S/P transform section 101b.

A case will be described below that the transmission signal mapping method of the present invention is performed using the radio transmission apparatus and radio reception apparatus with the above configurations. A case will be described below that channel quality information with six bits is transmitted.

In the radio transmission apparatus illustrated in FIG.6, transmission data (channel quality information) is allotted to upper three bits and lower three bits respectively to be output to P/S transform sections 401a and 401b. P/S transform section 401a performs P/S transform on data of the upper three bits to output to S/P transform section 101a. P/S transform section 401b performs P/S transform on data of the lower three bits to output to S/P transform section 101b.

S/P transform section 101a transforms the data of the upper three bits from serial data into parallel data, and outputs the parallel data to 16QAM mapping section 102 as data to be mapped onto bits (S0 and S1) with relatively high quality. S/P transform section 101b transforms the lower three bits from serial data into parallel data, and outputs the parallel data to 16QAM mapping section 102 as data to be mapped onto bits (S2 and S3) with relatively low quality.

16QAM mapping section 102 performs mapping on the data of the upper three bits and the data of the lower three bits on the signal space diagram of 16QAM by Gray Coding, and outputs respective in-phase component (I-component) signals and quadrature component (Q-component) signals of the data of the upper three bits and the data of the lower three bits to modulation section 103.

Modulation section 103 performs the digital modulation on the I-component signals and Q-component signals of the data of the upper three bits and the data of the lower three bits. The data of the upper three bits and the data of the lower three bits subjected to the digital modulation is output to radio transmission section 104, is subjected to the predetermined radio transmission processing in radio transmission section 104, and is transmitted to a communicating party via antenna 105.

In the reception apparatus, the signal transmitted from a communicating party is subjected to the predetermined radio reception processing and then to digital demodulation. Then, with respect to the I-component signal and Q-component signal, a decoded signal is subjected to demapping (decision) on the signal space diagram of 16QAM by Gray coding. Then, the data of the upper three bits is obtained from bits S0 and S1 assigned the data of the upper three bits, while the data of the lower three bits is obtained from bits S2 and S3 assigned the data of the lower three bits. Then, data of six bits (channel quality information) is obtained from the data of the upper three bits and the data of the lower three bits.

Thus, with respect to the data of upper three bits and the data of lower three bits transmitted from the radio transmission section illustrated in FIG.6 to the radio reception apparatus, the data of upper three bits is transmitted using bits S0 and S1, while the data of lower three bits is transmitted using bits S2 and S3. As shown in FIG.2, since S0 and S1 have a bit rate lower than that of S2 and S3 in 16QAM, the data of upper three bits is transmitted with relatively high transmission quality. In other words, the data of upper three bits requiring a relatively low possibility of being erroneous is transmitted with a lower possibility of being erroneous . Accordingly, the data of upper three bits is received with high quality in the radio reception apparatus, and it is thereby possible to decrease a probability that the channel quality information that is important information becomes greatly erroneous, decrease errors of bits having a great effect on the system when the bits are erroneous, and to decrease deterioration of the system performance. In other words, for example, with respect to the channel quality information, a probability that 63 becomes 31 is made lower than a probability that 63 becomes 62.

In addition, in this embodiment, the number of bits of transmit data assigned as upper or lower bits is predetermined in the system. Accordingly, the assignment of upper and lower bits is not limited in particular, as long as the upper bits are assigned to bits with high transmission quality in M-ary modulation. Further when bit error rates are classified into more than two like 64QAM, it may be possible to divide transmission data into more than two, and assign the divided bits to bits with different transmission quality.

While this embodiment explains a case that transmission data is composed of six bits, the present invention is similarly applicable to a case that transmission data is composed of a number of bits other than 6.

### (Fourth embodiment)

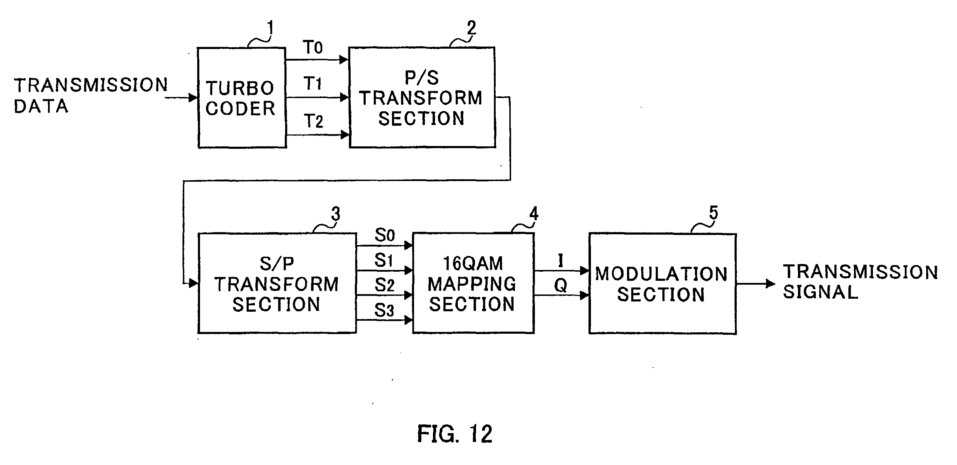

Conventionally, when performing M-ary modulation on turbo-coded data, as shown in FIG.12, P/S transform section 2 performs P/S transform on an output from turbo coder 1, i.e., T0 (non-coded data; referred to as a systematic bit), T1 (data subjected to recursive convolutional coding; referred to as parity bit 1) and T2 (data subjected to interleaving and then to recursive convolutional coding; referred to as parity bit 2), S/P transform section 3 transforms the resultant data into four sequences by S/P transform, and 16QAM mapping section 4 assigns data of the four sequences to S0 to S3. Modulation section 5 performs digital modulation on the assigned data to obtain a transmission signal.

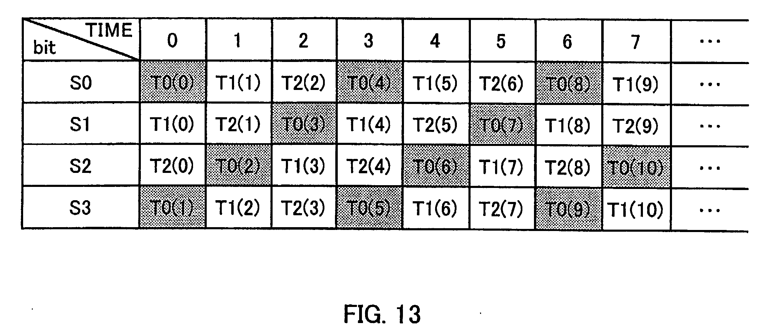

In the transmission signal mapping method, as shown in FIG.13, systematic bit T0 is equally assigned to all the bits, i.e., S0 to S3. In other words, data of T0 to T2 are assigned to bits S0 to S3 regularly in the order in which the data is output. In FIG.13 shaded portions indicate T0 data.

This embodiment explains a case that turbo coding is performed, and parity bits (T1 data and T2 data) and systematic bit (T0 data) are assigned to different bits, undergo M-ary modulation, and then are transmitted, thereby increasing the transmission quality to improve the reception performance at a receiving side. A case will be described below that a rate of turbo coding is 1/3.

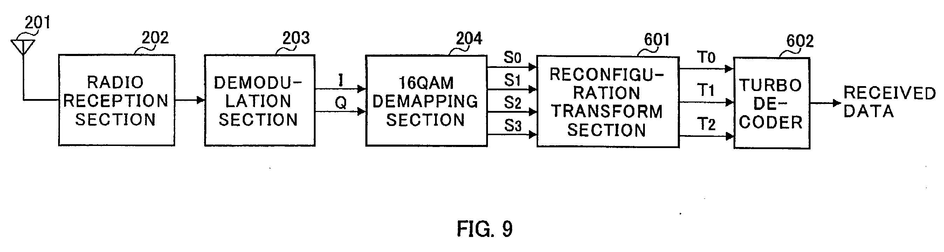

FIG.7 is a block diagram illustrating a configuration of a radio transmission apparatus according to the fourth embodiment of the present invention. In FIG.7 the same sections as in FIG.3 are assigned the same reference numerals as in FIG.3 to omit specific descriptions thereof. FIG.9 is a block diagram illustrating a configuration of a radio reception apparatus that performs radio communications with the radio transmission apparatus according to the fourth embodiment of the present invention. In FIG.9 the same sections as in FIG.4 are assigned the same reference numerals as in FIG.4 to omit specific descriptions thereof.

In addition, while FIG.7 shows only sections for transmission in the radio transmission apparatus to simplify the description and FIG.9 shows only sections for transmission in the radio reception apparatus to simplify the description, the radio transmission apparatus in FIG. 7 is provided with sections for reception and the radio reception apparatus in FIG.9 is provided with sections for transmission.

While this embodiment explains a case of transmitting a single item of transmission data, the present invention is applicable to a case of transmitting two or more items of transmission data.

The radio transmission apparatus illustrated in FIG. 7 is provided with turbo coder 501 that performs turbo coding on transmission data, S/P transform sections 502a to 502c that perform S/P transform on three outputs (T0 to T2) from turbo coder 501, and P/S transform sections 503a to 503d that perform P/S transform on data obtained by dividing outputs from S/P transform sections 502a to 502c into a predetermined number of bits.

S/P transform section 502a divides T0 data into three bits and one bit, and outputs the three bits to P/S transform section 503a, while outputting the one bit to P/S transform section 503b. S/P transform section 502b divides T1 data into two bits and two bits, and outputs the two bits to P/S transform section 503b, while outputting the two bits to P/S transform section 503c. S/P transform section 502c divides T2 data into one bits and three bits, and outputs the one bit to P/S transform section 503c, while outputting the three bits to P/S transform section 503d.

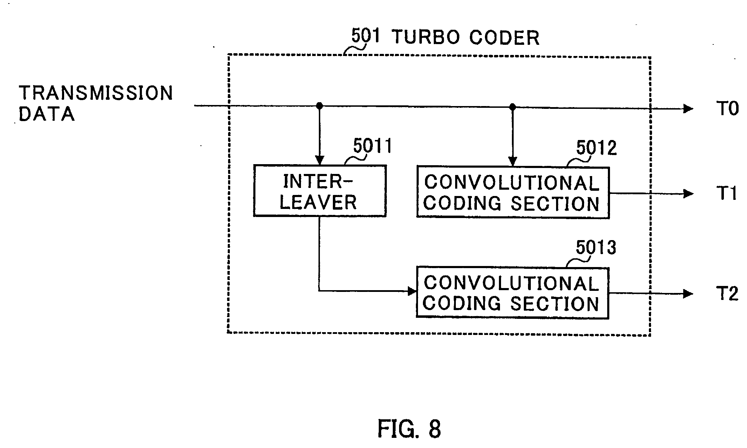

Turbo coder 501 has a configuration illustrated in FIG.8. In other words, turbo coder 501 is provided with interleaver 5011 that performs interleaving on transmission data, convolutional coding section 5012 that performs recursive convolutional coding on transmission data, and convolutional coding section 5013 that performs recursive convolutional coding on transmission data subjected to interleaving. An output from convolutional coding section 5012 is T1 (parity bit 1), and an output from convolutional coding section 5012 is T2 (parity bit 2). Data (systematic bit) that is not subjected to coding in transmission data is T0.

The radio reception apparatus illustrated in FIG.9 is provided with reconfiguration transform section 601 that performs bit reconfiguration on an output of 16QAM demapping section 204, i.e., bits S0 to S3, and turbo decoder 602 that performs turbo decoding using T0 to T2 data obtained by reconfiguration.

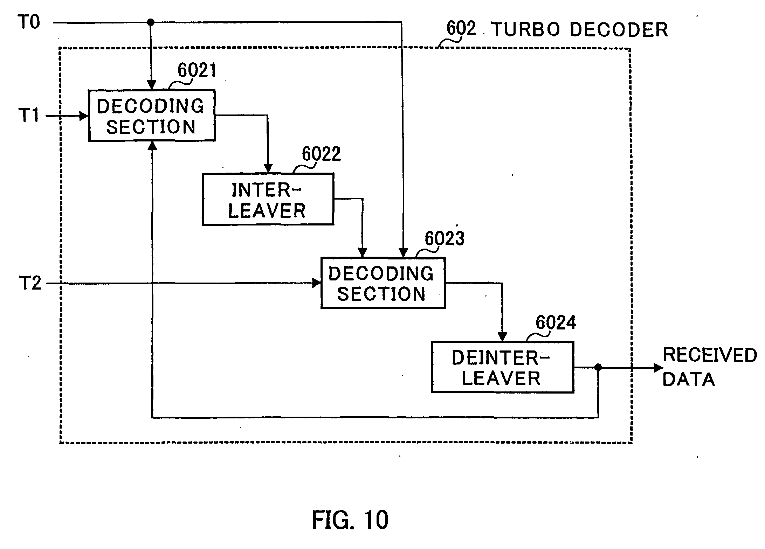

Turbo decoder 601 has a configuration illustrated in FIG.10. In other words, turbo decoder 601 has decoding section 6021 that performs decoding using T0 data, T1 data and external information from deinterleaver 6024, interleaver 6022 that performs interleaving on an output from decoding section 6021, decoding section 6023 that performs decoding using interleaving-processed data, T2 data and T0 data, and deinterleaver 6024 that performs deinterleaving on an output from decoding section 6023.

A case will be described below that the transmission signal mapping method of the present invention is performed using the radio transmission apparatus and radio reception apparatus with the above configurations.

In the radio transmission apparatus illustrated in FIG.7, transmission data is output to turbo coder 501 and undergoes turbo coding. In turbo coding, the transmission data itself is output as T0 data, convolutional coding section 5012 performs recursive convolutional coding on the transmission data to obtain T1 data, and convolutional coding section 5013 performs recursive convolutional coding on the transmission data subjected to interleaving in interleaver 5011 to obtain T2 data.

The T0 data to T2 data is respectively output to S/P transform sections 502a to 502c. In other words, T0 data is output to S/P transform section 502a, T1 data is output to S/P transform section 502b, and T2 data is output to S/P transform section 502c.

S/P transform section 502a transforms T0 data from serial data into parallel data, divides the parallel data into three bits and one bit, and outputs the three bits to P/S transform section 503a, while outputting the one bit to P/S transform section 503b. S/P transform section 502b transforms T1 data from serial data into parallel data, divides the parallel data into two bits and two bits, and outputs the two bits to P/S transform section 503b, while outputting the two bits to P/S transform section 503c. S/P transform section 502c transforms T2 data from serial data into parallel data, divides the parallel data into one bits and three bits, and outputs the one bit to P/S transform section 503c, while outputting the three bits to P/S transform section 503d.

Accordingly, P/S transform section 503a receives as its inputs three bits of T0 data, P/S transform section 503b receives as its inputs one bit of T0 data and two bits of T1 data, P/S transform section 503c receives as its inputs two bits of T1 data and one bit of T2 data, and P/S transform section 503d receives as its inputs three bits of T2 data.

T0 to T2 data are thus assigned so as to map the systematic bit (T0 data) onto bits (S0 and S1) with the relatively high quality. Accordingly, P/S transform section 503a outputs three bits of T0 data to 16QAM mapping section 102 as data to be assigned to bit S0. P/S transform section 503b outputs one bit of T0 data and two bits of T1 data to 16QAM mapping section 102 as data to be assigned to bit S1. P/S transform section 503c outputs two bits of T1 data and one bit of T2 data to 16QAM mapping section 102 as data to be as signed to bit S2. P/S transform section 503d outputs three bits of T2 data to 16QAM mapping section 102 as data to be assigned to bit S3. In addition, bits to which T0 data to T1 data are assigned are predetermined in the system.

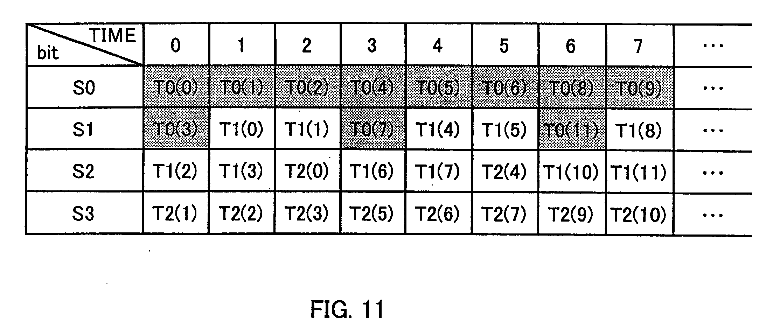

As shown in FIG. 11, 16QAM mapping section 102 always assigns T0 to S0 or S1 with high transmission quality (shaded portions in FIG.11). In this way, the section 102 performs mapping on T0 data to T2 data on the signal space diagram of 16QAM by Gray Coding, and outputs respective in-phase component (I-component) signals and quadrature component (Q-component) signals of T0 data to T2 data to modulation section 103.

Modulation section 103 performs the digital modulation on the I-component signals and Q-component signals of T0 data to T2 data. T0 data to T2 data subjected to the digital modulation is output to radio transmission section 104, is subjected to the predetermined radio transmission processing in radio transmission section 104, and is transmitted to a communicating party via antenna 105.

In the reception apparatus illustrated in Fig 9, the signal transmitted from a communicating party is subjected to the predetermined radio reception processing and then to digital demodulation. Then, with respect to the I-component signal and Q-component signal, a decoded signal is subjected to demapping (decision) on the signal space diagram of 16QAM by Gray coding. Then, bits S0 to S3 output from 16QAM demapping section 204 are output to reconfiguration transform section 601.

According to the assignment illustrated in FIG.11, reconfiguration transform section 601 reconfigures T0 data to T2 data assigned to S0 to S3 to output to turbo decoder 602 as T0 data to T2 data.

In turbo decoder 602, decoding section 6021 performs decoding using T0 data, T1 data and external information (initial value is 0) from deinterleaver 6024, interleaver 6022 performs interleaving on an output from decoding section 6021, decoding section 6023 performs decoding using interleaving-processed data, T2 data and T0 data, and deinterleaver 6024 performs deinterleaving on an output from decoding section 6023. An output from deinterleaver 6024 is returned to decoding section 6021 as feedback as reliability information, and the above processing is repeated. Received data is thus obtained.

In this way, with respect to T0 data to T2 data transmitted from the radio transmission apparatus illustrated in FIG.7 to the radio reception apparatus illustrated in FIG.9, T0 data is transmitted using bits S0 and S1, T1 data is transmitted using bits S1 and S2, and T2 data is transmitted using bits S2 and S3. As shown in FIG.2, since S0 and S1 have a bit rate lower than that of S2 and S3 in 16QAM, T0 data is transmitted with relatively high transmission quality. In other words, T0 data apt to be erroneous is transmitted with a lower possibility of being erroneous. Accordingly, T0 data is received with high quality in the radio reception apparatus, and thereby reception quality of a result of turbo decoding is improved.

In addition, in this embodiment, the assignment of turbo coded data to bits is not limited particularly, as long as a systematic bit whose erroneous result is not desired is assigned to a bit with high transmission quality in M-ary modulation.

While this embodiment explains the case that a rate of turbo coding is 1/3, the present invention is similarly applicable to other cases that a rate of turbo coding is not 1/3.

Above-mentioned embodiments 1 to 4 explain the case that M-ary modulation is 16QAM. However, the present invention has the same effectiveness as in 16QAM when using M-ary modulation such as 64QAM (one symbol; six bits) and 256QAM (one symbol; eight bits) besides 16QAM. In particular, in M-ary modulation with a large number of modulation levels, since the bit error rate for each bit differs stepwise, it is possible to vary stepwise the quality of data to be transmitted.

While above-mentioned embodiments 1 to 4 explain the case of using Gray Coding in M-ary modulation, the present invention is similarly applicable to other cases of performing modulation other than Gray Coding in M-ary modulation. However, since Gray Coding provides a signal space diagram that minimizes an average bit error rate, using Gray Coding in M-ary modulation provides the most excellent performance.

The present invention is not limited to above-mentioned embodiments 1 to 4, and is capable of being carried into practice with various modifications thereof. The radio transmission apparatus of the present invention is applicable to a base station apparatus and communication terminal apparatus in a digital radio communication system. It is thereby possible to perform radio communications with transmission efficiency and reception performance both improved.

A radio transmission apparatus of the present invention adopts a configuration provided with a mapping section that assigns a specific signal sequence in a transmission signal preferentially to a bit with high transmission quality in a same symbol to perform mapping in M-ary modulation, and a transmitting section that transmits a signal subjected to the M-ary modulation to a communicating party.

According to this configuration, a specific signal sequence is transmitted with relatively high transmission quality, and is received with high quality in a radio reception apparatus, and reception quality in the radio reception apparatus is thereby improved.

A radio transmission apparatus of the present invention adopts the above configuration where the specific signal sequence is one selected from the group consisting of an upper bit in a plurality of bits, repeat information, information with high importance, and information affecting greatly a system.

A radio transmission apparatus of the present invention adopts a configuration provided with a turbo coding section that performs turbo coding on a transmission signal, a mapping section that assigns a signal sequence that is not coded in the turbo coding preferentially to a bit with high transmission quality in a same symbol to perform mapping in M-ary modulation, and a transmitting section that transmits a signal subjected to M-ary modulation to a communicating party.

According to this configuration, since a systematic bit is transmitted with relatively high transmission quality, and is received with high quality in a radio reception apparatus, and reception quality of a result of decoding is thereby improved.

A radio transmission apparatus of the present invention adopts the above configuration where Gray Coding is used in the M-ary modulation.

According to this configuration, since a signal space diagram is one that minimizes an average bit error rate, it is possible to obtain the most excellent performance.

It is a feature of a base station apparatus of the present invention to have the above radio transmission apparatus. It is a feature of a communication terminal apparatus of the present invention to have the above radio transmission apparatus. It is thereby possible to perform radio communications with transmission efficiency and reception performance both improved.

A transmission signal mapping method of the present invention has a mapping step of assigning a specific signal sequence in a transmission signal preferentially to a bit with high transmission quality in a same symbol to perform mapping in M-ary modulation, and a transmitting step of transmitting a signal subjected to the M-ary modulation to a communicating party.

According to this method, a specific signal sequence is transmitted with relatively high transmission quality, and is received with high quality in a radio reception apparatus, and reception quality in the radio reception apparatus is thereby improved.

A transmission signal mapping method of the present invention has a turbo coding step of performing turbo coding on a transmission signal, a mapping step of assigning a signal sequence that is not coded in the turbo coding preferentially to a bit with high transmission quality in a same symbol to perform mapping in M-ary modulation, and a transmitting step of transmitting a signal subjected to the M-ary modulation to a communicating party.

According to this configuration, since a systematic bit is transmitted with relatively high transmission quality, and is received with high quality in a radio reception apparatus, and reception quality of a result of decoding is thereby improved.

As described above, according to the present invention, using the superiority or inferiority of transmission quality for each bit in performing M-ary modulation, bits with relatively high transmission quality are assigned information whose erroneous result is not desired, important information, and information whose erroneous result affects the system greatly. As a result, it is possible to improve reception performance including decoding and repeat at a receiving side and transmission efficiency.

This application is based on the Japanese Patent Application No.2000-286826 filed on September 21, 2000, entire content of which is expressly incorporated by reference herein.

### Industrial Applicability

The present invention is applicable to a radio transmission apparatus and transmission signal mapping method in a digital radio communication system.

## Claims

1. A radio transmission apparatus comprising:
mapping means for assigning a specific signal sequence in a transmission signal preferentially to a bit with high transmission quality in a same symbol to perform mapping in M-ary modulation; and
transmitting means for transmitting a signal subjected to the M-ary modulation to a communicating party.

2. The radio transmission apparatus according to claim 1, wherein the specific signal sequence is one selected from the group consisting of an upper bit in a plurality of bits, repeat information, information with high importance, and information affecting greatly a system.

3. A radio transmission apparatus comprising:
turbo coding means for performing turbo coding on a transmission signal;
mapping means for assigning a systematic bit in the turbo coding preferentially to a bit with high transmission quality in a same symbol to perform mapping in M-ary modulation; and
transmitting means for transmitting a signal subjected to the M-ary modulation to a communicating party.

4. The radio transmission apparatus according to claim 1, wherein Gray Coding is used in the M-ary modulation.

5. Abase station apparatus having a radio transmission apparatus, the radio transmission apparatus comprising:
mapping means for assigning a specific signal sequence in a transmission signal preferentially to a bit with high transmission quality in a same symbol to perform mapping in M-ary modulation; and
transmitting means for transmitting a signal subjected to the M-ary modulation to a communicating party.

6. A communication terminal apparatus having a radio transmission apparatus, the radio transmission apparatus comprising:
mapping means for assigning a specific signal sequence in a transmission signal preferentially to a bit with high transmission quality in a same symbol to perform mapping in M-ary modulation; and
transmitting means for transmitting a signal subjected to the M-ary modulation to a communicating party.

7. A transmission signal mapping method comprising:
a mapping step of assigning a specific signal sequence in a transmission signal preferentially to a bit with high transmission quality in a same symbol to perform mapping in M-ary modulation; and
a transmitting step of transmitting a signal subjected to the M-ary modulation to a communicating party.

8. A transmission signal mapping method comprising;
a turbo coding step of performing turbo coding on a transmission signal;
a mapping step of assigning a systematic bit preferentially to a bit with high transmission quality in a same symbol to perform mapping in M-ary modulation; and
a transmitting step of transmitting a signal subjected to the M-ary modulation to a communicating party.
